# EUROPEAN PATENT SPECIFICATION

(11) **EP 3 912 703 B1**
(45) Date of publication and mention of the grant of the patent: **12.07.2023**
(21) Application number: 21151563.0
(22) Date of filing: 14.01.2021
(51) Int. Cl.: B01D 53/00, F25J 3/08, B01D 49/00, B01D 53/24

(54) **GAS PURIFICATION METHOD FROM IMPURITIES**
GASREINIGUNGSVERFAHREN VON VERUNREINIGUNGEN
PROCÉDÉ DE PURIFICATION DE GAZ ET D'ÉLIMINATION D'IMPURETÉS

(30) Priority: 19.05.2020 RU 2020117714
(43) Date of publication of application: 24.11.2021
(73) Proprietor: Aladyev, Sergey I., Moscow 127083 (RU); Baklyukova, Ekaterina P., Moscow 127083 (RU); Aladyev, Ivan S., Moscow 127083 (RU)
(72) Inventor: Aladyev, Sergey I., 127083 Moscow (RU)
(74) Representative: Michalski Hüttermann & Partner Patentanwälte mbB

(56) References cited:
- US-A1- 2013 228 076
- US-B1- 6 280 502
- US-B2- 6 776 825
- SHOOSHTARI S.H. RAJAEE ET AL: "Optimal operation of refrigeration oriented supersonic separators for natural gas dehydration via heterogeneous condensation", APPLIED THERMAL ENGINEERING, vol. 139, 1 July 2018 (2018-07-01), pages 76-86, XP055822101, GB ISSN: 1359-4311, DOI: 10.1016/j.applthermaleng.2018.04.109 Retrieved from the Internet: URL:https://www.sciencedirect.com/science/ article/pii/S1359431117369454/pdfft?md5=bc 84fad45ecbd04da05cf8a1ce3b8015&pid=1-s2.0- S1359431117369454-main.pdf>
- TANIMURA SHINOBU ET AL: "Following heterogeneous nucleation of CO 2 on H 2 O ice nanoparticles with microsecond resolution", RSC ADVANCES, vol. 5, no. 128, 1 January 2015 (2015-01-01), pages 105537-105550, XP055821217, GB ISSN: 2046-2069, DOI: 10.1039/C5RA19782A

## Description

The invention refers to the field of the gas mixtures separation and can be used for the extraction of one or more target components or for purify gases from impurities.

It is known the method of separation of gas mixture by condensation of one or more gases from the mixture during flow it through supersonic nozzle with further condensate separation (Patent RF Nr2380630, 2008).

There is also a known method of separation natural multi-component hydrocarbon gases by extension the gas flow in supersonic nozzle, while condensed hydrocarbon components are added to the original gas. In addition, the original gas is cooled by liquid extracted from the gas flow and/or purified gas (Russian Patent No. 2291736, 2004).

In both known methods the phase change of one or more components transfers from gas to liquid state. The shortcomings of the methods are the relative low degree of components separation or gas purification, as well as the difficulty of separating condensed liquid drops formed during condensation from a turbulent gas flow.

The proposed method of cleaning/separating gas mixtures uses the transition of one or more components from the gas phase to the solid - the desublemization of impurity vapors or target components from the oversaturated gas environment. The required supercooling/saturation achieves owing to an expanding (acceleration) the gas emissions flow in a supersonic nozzle. The phase change occurs on solid particles introduced in the supersonic flow. The method allows practically fully extracting the target component and more easily to separate solid particles, in cyclones, for example. It can be used to separate various substances from the gas phase, both organic and inorganic. For example, it is possible to extract such gases as sulfur dioxide (SO₂), nitrous oxide (N₂O), nitrogen trifluoride (NF₃) or sulfur hexafluoride (SF₆), carbon dioxide (CO₂), vapors of As, Se, phenol, benzene and other substances.

From the document S.H. Rajaee Shooshtari et al.: "Optimal operation of refrigeration oriented supersonic separators for natural gas dehydration via heterogeneous condensation", Applied Thermal Engineering, vol. 139, 1 July 2018 (2018-07-01), pages 76-86, the operation of refrigeration oriented supersonic separators for natural gas dehydration via heterogeneous condensation is known. To promote the overall condensation rate and facilitate the separation of condensed phase from natural gas streams, certain rates of edible salt particles are assumed in the document to be injected into the gas flow at the refrigerative supersonic separators unit entrance.

From the document Shinobu Tanimura et al.: "Following heterogeneous nucleation of CO2 on H2O ice nanoparticles with microsecond resolution", RSC Advances, vol. 5, no. 128, 1 January 2015 (2015-01-01), pages 105537-105550, the nucleation/condensation of CO₂/H₂O gas mixtures with microsecond resolution in supersonic Laval nozzles using pressure trace measurement (PTM) and small angle X-ray scattering (SAXS) is known. The latent heat release detected by the PTM reveals that the first phase transition in the expanding CO₂/H₂O mixture is the formation of H₂O ice particles by the homogeneous nucleation/condensation and freezing of H₂O. This is followed by the heterogeneous nucleation and growth of CO₂ on the H₂O ice particles. The onset conditions for heterogeneous nucleation, i.e. the partial pressure of CO₂ and temperature from PTM and the radius of gyration of the H₂O ice particles from SAXS, were determined in the temperature range 124 to 146 K and for particles with radii of gyration in the range of 2.1 to 4.3 nm.

To remove impurities by desublemization, it is not enough to have only significant supercooling. Sooner or later the increase of supercooling/supersaturation will lead to an avalanche-like homogeneous nucleation, in so-called condensation (desublemization) shocks arisen in the flow.

Existing experience says that in racing condensation can be extracted a maximum of 20 - 30% of the vaporous. In addition, the size of the particulate matter produced varies from a fraction of a micron to a single micron. This makes it difficult, if not impossible, to separate solid particles from the gas flow in further. In this regard, it is proposed to use the controlled condensation. Thus, it is possible, to avoid the formation of condensation shocks, to make the process of phase changes manageable and simultaneously to create a large interface between phases, thus ensuring a high intensity of mass transfer. Important for the discussed technology is the fact that the possibility of the choice of particle sizes makes it easy for their separation in the cyclone.

The essence of the gas purification method is as follows. The initial vapor-gas mixture comes to the input of a supersonic nozzle (Laval nozzle, nozzle with a central body and other). In it, the flow expands to M > 1 and enters in the "working" section (condensation chamber). Solid particles on which condensation (solid-vapor phase changes) of the extracted component takes are supplied also there. Then the two-phase flow (gas with solid particles) enters to a separation device, for example, a cyclone. In it the mixture is divided into a gas and solid particles.

The solid particles on which desublemization takes place can consist of the same substance that is extracted from the gas stream. At least some of them, separated from the gas flow in the cyclone, can be delivered into the working chamber to be used again as desublemization cores.

In general case the working section (working area, extraction chamber) is a channel with a variable cross section. Its input cross-section is equal to output cross-section of the supersonic nozzle. The size of its output cross-section is determined from the gas mixture rate and requirements to the gas velocity on cyclone's input.

Solid particles are supplied through holes in the side surface of the working chamber.

The initial gas flow, if necessary, must be pre-cooled. For this purpose, gas cooled during expansion in a supersonic nozzle can be used as one of the heat-transfer agents of the heat exchanger.

The large values of the supercooling ΔT necessary for intensive vapor condensation are attained only at M ≥ 1. In other words, they arise only as the flow approaches to the critical cross-section of the nozzle and in its supersonic part.

In the case when the conditions (temperature, pressure) required for the extraction of various impurities contained in the gas mixture by means of desublemization are significantly different from each other, the purification process of such components should be carried out sequentially. After the completion of the first cycle, the partially purified gas mixture comes again to the inlet of another supersonic nozzle and the cycle is repeated. The number of the cycles depends on the composition of the mixture and the required degree of purification.

Examples of the implementation of the method.

Extraction of succinic anhydride and phthalic anhydride vapors from an air mixture.

Atmospheric air was compressed in a pump, then heated in a heat exchanger and passed through a melt layer of succinic and phthalic anhydrides. The resulting vapor-gas mixture with a volumetric concentration of anhydrides about C = 0.5-1.0% was supplied to the input of the Laval nozzle, in which it expanded (accelerated). The diameters of input, critical and output cross-sections were equal 13.6, 1.95 and 14,6 mm, respectively. Directly after the output cross-section of the nozzle, a "working" section (chamber) was installed. There were a cylindrical section of the 15 mm long and an expanding section of 63 mm long. The cylindrical section had holes in the side wall through which solid particles consisting of succinic anhydride were supplied by means of a gas transport. The diameter of the particles was equal 20 -30 microns. After the separation of solid particles from a gas in the cyclone, the gas flow passed through the tissue filter, and then through a layer of an aqueous solution of alkali. It was shown experimentally that succinic and phthalic anhydrides were absent in the gas phase at the exit from the cyclone. Thus, there extraction was complete.

In the above experiment, the air in the compressor was pre-compressed in order to create the pressure drop required to ensure supersonic flow from the nozzle. However, a situation may arise when, in order to organize the phase change vapor - solid, it is required to decrease/increase the temperature and pressure of the emission gases before they enter the nozzle inlet. For example, to extract CO₂ from air, the pressure and temperature of which at the triple point are equal P * = 518.6 kPa (5.11 atm) and T * = 216.55 K (-56.6 °C), respectively, it would be advisable pre-cool it to T = 190 K and pre-compress it to a pressure of P0≈5.5 atm (we assume that the volumetric concentration of CO2 is 4%). After that the air are to come to input of supersonic nozzle. Then, under relatively small Mach numbers (M > 1,1-1,5), it is possible to obtain a gas mixture at the output from supersonic nozzle with T = 150 K and P = 2.5 atm, and supercooling about ΔT = 25 K, which would be sufficient to extract carbon dioxide from the gas mixture. At the same time, to separate, say, sulfur dioxide SO₂ from an air mixture in which the volume concentration of SO₂ is 1.5%, it would be enough to pre-cool the initial mixture to about 210 K without pre-compressing it in the compressor. Then, at the exit from the nozzle, in a mixture cooled to 170 K, we would have supercooling ΔT = 25-30 K.

In these examples, the process of separating of gas and solid phases should be carried out at temperatures much lower than the ambient temperature. To create working spaces with such low temperatures, a gas flow expanded in a supersonic nozzle can be used as one of the heat-transfer agents of the heat exchanger. This would contribute to the creation of an energy-saving technology for cleaning gas emissions.

## Claims

1. Method for the purification of gas the method comprising the following steps:
- expanding a gas flow in a supersonic nozzle, wherein the gas flow containing components to be extracted from the gas flow, wherein the gas flow increases to supersonic velocities inside the supersonic nozzle, wherein a supercooling of the gas flow for a desublimation of the components to be extracted from the gas flow is achieved,
- introducing the supersonic gas flow into a working chamber,
- supplying solid particles at the inlet of the working chamber, whereby a two-phase flow is formed, comprising a gas phase and solid particles, on whose surface the desublimation of the components to be extracted from a gas phase to a solid phase takes place,
- separating the gas phase from the solid phase.

2. The method according to claim 1, **characterized in that** the original gas flow cooled during expanding in the nozzle is at the same time a cold heat-transfer agent in a heat exchanger, designed to produce the low-temperature zones necessary for the sustained existence of a solid phase separated from the gas phase.

3. The method according to claim 1, **characterized in that** the separation of solid and gas phase occur in a cyclone.

4. The method according to claim 1, **characterized in that** the working chamber is a channel of variable cross section, input cross-section of it is equal to output cross-section of the supersonic nozzle and, preferably, expanding before entering the cyclone.

5. The method according to claim 1, **characterized in that** as nozzles are used nozzles with variable geometry, in particular nozzles with a central body.

6. The method according to claim 1, **characterized in that** the working chamber is supplied with solid particles, consisting of a material removed from the gas flow by desublimation.

## Patentansprüche

1. Verfahren zum Reinigen von Gas, wobei das Verfahren die folgenden Schritte aufweist:
Expandieren eines Gasstroms in einer Überschalldüse, wobei der Gasstrom aus dem Gasstrom zu extrahierende Komponenten enthält, wobei der Gasstrom innerhalb der Überschalldüse auf Überschallgeschwindigkeiten beschleunigt wird, wobei eine Unterkühlung des Gasstroms für eine Desublimation der aus dem Gasstrom zu extrahierenden Komponenten erreicht wird;
Einleiten des Überschallgasstroms in eine Arbeitskammer;
Zuführen von Feststoffpartikeln am Einlass der Arbeitskammer, wodurch ein Zweiphasenstrom gebildet wird, der eine Gasphase und Feststoffpartikel enthält, an deren Oberfläche die Desublimation der zu extrahierenden Komponenten aus einer Gasphase in eine feste Phase stattfindet;
Trennen der Gasphase von der festen Phase.

2. Verfahren nach Anspruch 1, **dadurch gekennzeichnet, dass** der ursprüngliche Gasstrom, der während der Expansion in der Düse abgekühlt wird, gleichzeitig ein kaltes Wärmeübertragungsmittel in einem Wärmetauscher ist, der dafür konfiguriert ist, die für die anhaltende Existenz einer von der Gasphase getrennten festen Phase erforderlichen Tieftemperaturzonen zu erzeugen.

3. Verfahren nach Anspruch 1, **dadurch gekennzeichnet, dass** die Trennung von fester und gasförmiger Phase in einem Zyklon erfolgt.

4. Verfahren nach Anspruch 1, **dadurch gekennzeichnet, dass** die Arbeitskammer ein Kanal mit variablem Querschnitt ist, dessen Eingangsquerschnitt dem Ausgangsquerschnitt der Überschalldüse gleicht und der sich vorzugsweise vor dem Eintritt in den Zyklon erweitert.

5. Verfahren nach Anspruch 1, **dadurch gekennzeichnet, dass** als Düsen Düsen mit variabler Geometrie, insbesondere Düsen mit einem Zentralkörper, verwendet werden.

6. Verfahren nach Anspruch 1, **dadurch gekennzeichnet, dass** der Arbeitskammer Feststoffpartikel zugeführt werden, die aus einem durch Desublimation aus dem Gasstrom entfernten Material bestehen.

## Revendications

1. Procédé de purification de gaz, le procédé comprenant les étapes suivantes :
- expansion d'un flux de gaz dans une buse supersonique, dans lequel le flux de gaz contient les composants à extraire du flux de gaz, dans lequel le flux de gaz augmente à des vitesses supersoniques à l'intérieur de la buse supersonique, dans lequel un surrefroidissement du flux de gaz pour une désublimation des composants à extraire du flux de gaz est obtenu,
- introduction du flux de gaz supersonique dans une chambre de travail,
- alimentation en particules solides au niveau de l'entrée de la chambre de travail, par laquelle un flux biphasique est formé, comprenant une phase gazeuse et des particules solides, sur la surface desquelles la désublimation des composants à extraire d'une phase gazeuse en une phase solide a lieu,
- séparation de la phase gazeuse d'avec la phase solide.

2. Procédé selon la revendication 1, **caractérisé en ce que** le flux de gaz d'origine refroidie pendant l'expansion dans la buse est simultanément un agent de transfert thermique froid dans un échangeur de chaleur, conçu pour produire les zones de basse température nécessaires à l'existence prolongée d'une phase solide séparée de la phase gazeuse.

3. Procédé selon la revendication 1, **caractérisé en ce que** la séparation des phases solide et gazeuse se déroule dans un cyclone.

4. Procédé selon la revendication 1, **caractérisé en ce que** la chambre de travail est un canal de section transversale variable, la section transversale d'entrée de celui-ci est égale à la section transversale de sortie de la buse supersonique et, de façon préférentielle, s'agrandit avant d'entrer dans le cyclone.

5. Procédé selon la revendication 1, **caractérisé en ce que** les buses sont des buses utilisées de géométrie variable, en particulier des buses avec un corps central.

6. Procédé selon la revendication 1, **caractérisé en ce que** la chambre de travail est alimentée en particules solides, constituées d'une matière retirée du flux de gaz par désublimation.
